Europäisches Patentamt

European Patent Office

Office européen des brevets

(11) Numéro de publication: **0 343 033**
A1

(12) **DEMANDE DE BREVET EUROPEEN**

(21) Numéro de dépôt: 89401250.9

(22) Date de dépôt: 03.05.89

(51) Int. Cl.4: **G 01 B 17/00**
G 01 B 11/00, G 01 N 33/38

(30) Priorité: 03.05.88 FR 8805933

(43) Date de publication de la demande:
23.11.89 Bulletin 89/47

(84) Etats contractants désignés:
AT BE CH DE ES FR GB GR IT LI LU NL SE

(71) Demandeur: **CENTRE D'ETUDES ET DE RECHERCHES DE L'INDUSTRIE DU BETON MANUFACTURE**
B. P. 59
F-28230 Epernon (FR)

(72) Inventeur: **Dummer, Karl**
15, rue du 4 octobre 1870
F-28230 Epernon (FR)

**Aufredou, Claude**
8, rue Gutenberg
F-28000 Chartres (FR)

(74) Mandataire: **Joly, Jean-Jacques et al**
CABINET BEAU DE LOMENIE 55, rue d'Amsterdam
F-75008 Paris (FR)

(54) Ensemble de mesure et de contrôle de produits frais en béton.

(57) Des capteurs à ultrasons ou à laser comprenant chacun une sonde émettrice et réceptrice d'ultrasons ou d'un rayon laser ont leurs sondes (10, 11) disposées de manière à fournir des premières informations représentatives de la hauteur d'une face supérieure d'au moins un produit (1) porté par une planche (3), en différents points de cette face supérieure, et des deuxièmes informations représentatives de la hauteur de la face supérieure de la planche (3) en différents points de celle-ci, les premières et deuxièmes informations étant obtenues au cours d'un défilement relatif entre les sondes et la planche portant un ou plusieurs produits, et les capteurs sont reliés à un circuit de traitement (20) recevant les premières et deuxièmes informations et comprenant des moyens de calcul de la hauteur des produits sur la planche à partir des premières et deuxièmes informations.

Fig. 1

EP 0 343 033 A1

# Description

## Ensemble de mesure et de contrôle de produits frais en béton

L'invention concerne un ensemble de mesure et de contrôle de dimension de produits frais en béton portés par un support horizontal, tel que planche, fond de moule ..., en sortie d'une machine de fabrication, et plus particulièrement un ensemble du type comportant au moins un capteur permettant de déterminer une dimension des produits portés par le support, par différence entre la hauteur de la face supérieure des produits et la hauteur de la face supérieure du support sur lequel reposent les produits, ou de toute autre référence.

Un contrôle dimensionnel des produits en béton tels que blocs, entrevous, pavés, bordures, prédalles précontraintes, ... est effectué au stade de la fabrication afin de s'assurer que leurs dimensions se situent dans une plage prédéterminée. Il est important que ce contrôle soit réalisé le plus rapidement possible après la fabrication afin, le cas échéant, d'intervenir au plus vite sur la machine.

A cet effet, le document FR-A- 2 586 610 divulgue un ensemble de mesure et de contrôle du type précité disposé en sortie de la machine de moulage et comprenant des palpeurs à galet qui explorent par contact la face supérieure des produits et la face supérieure de la planche-support afin de fournir, par différence, une information représentative de la dimension des produits entre leurs faces inférieure et supérieure.

L'utilisation de palpeurs à galet fonctionnant par contact requiert un bon état de surface des parties explorées et n'est envisageable qu'avec des produits peu fragiles ou peu déformables. Or, il n'en est pas toujours ainsi dans le cas de produits frais en béton, notamment pour des produits à parois minces offrant au galet du palpeur des surfaces supérieures de roulement étroites, friables et souvent inégales.

Par ailleurs, l'emploi d'un tel dispositif pour contrôler des produits de petites dimensions, tels que pavés, disposés en colonnes et rangées rapprochées les unes des autres est délicat. Ce dispositif n'est pas adapté pour des produits fabriqués à l'aide de béton plastique, donc déformables tels que prédalles par exemple.

De plus, le support sur lequel reposent les produits présente aussi une face supérieure inégale notamment en raison de la présence inévitable de débris.

Aussi, la présente invention a-t-elle pour but de fournir un ensemble de mesure et de contrôle capable de mesurer une dimension de produits frais en béton en l'état où ils se présentent sur leur support en sortie de fabrication sans rencontrer les inconvénients précités.

Ce but est atteint au moyen d'un ensemble de mesure et de contrôle du type défini en tête de la présente description et dans lequel, conformément à l'invention : le ou chaque capteur est un capteur sans contact comprenant une sonde êmettrice et réceptrice d'un rayonnement et capable de fournir un signal représentatif de la distance entre la sonde et une surface située en regard de la sonde,

- la ou chaque sonde est disposée de manière à fournir au moyen du ou de chaque capteur des premières informations représentatives de la hauteur d'une face supérieure d'au moins un produit porté par le support, en différents points de cette face supérieure, et des deuxièmes informations représentatives de la hauteur de la face supérieure du support sur lequel reposent les produits, en différents points de celui-ci, les premières et deuxièmes informations étant obtenues au cours d'un défilement relatif entre la ou chaque sonde et le support sur lequel reposent un ou plusieurs produits, et

- le ou chaque capteur est relié à un circuit de traitement recevant les premières et deuxièmes informations et comprenant des moyens de calcul de la dimension recherchée à partir des premières et deuxièmes informations.

L'utilisation de capteurs de distance utilisant un rayonnement tel qu'un rayonnement ultrasonore ou un rayon laser, permet une mesure de hauteur de la face supérieure des produits sans contact, de sorte que l'ensemble de mesure et de contrôle selon l'invention est utilisable avec des produits frais en béton même fragiles, friables ou déformables.

La hauteur de la face supérieure des produits et la hauteur de la face supérieure du support sur lequel reposent les produits, ou de toute autre référence représentative de la hauteur du support, sont mesurées en continu lors du défilement relatif entre la ou chaque sonde et le support sur lequel reposent les produits. On dispose de la sorte d'un ensemble d'informations qui permettent de calculer une valeur représentative de la dimension recherchée en s'affranchissant de variations locales de hauteur dues à un état de surface inégal des produits ou à la présence de débris sur le support des produits. La dimension recherchée pourra être obtenue par calcul d'une valeur moyenne à partir des informations reçues par le circuit de traitement.

L'ensemble de mesure et de contrôle selon l'invention pourra comprendre au moins un premier capteur ayant une sonde située en regard d'une face supérieure d'un produit porté par la planche et un deuxième capteur ayant une sonde située en regard de la face supérieure du support en dehors de la zone de celui-ci occupée par les produits, lors du défilement relatif entre les sondes et le support. Les premières et deuxièmes informations de hauteur sont alors fournies respectivement par le premier capteur et le deuxième capteur.

Les mesures de hauteur peuvent être effectuées au cours du transfert des produits sur planche entre une machine de moulage et un poste suivant de l'installation de fabrication des produits, par exemple, pour les produits fabriqués sur presses vibrantes, un ascenseur de préstockage. Le déplacement relatif entre les sondes et la planche est alors produit par le mouvement de transfert de la planche au regard des sondes. Le dispositif de mesure et de contrôle selon l'invention peut alors être intégré à l'installation de fabrication des produits sans aucune modification de cette installation ou du processus de fabrication puisque le mouvement de transfert des produits par la planche n'a pas à être interrompu.

En variante, un seul capteur de distance à ultrasons pourra être prévu. La sonde est alors disposée ou déplacée pour être alternativement ou successivement en regard d'une face supérieure des produits ou de la surface supérieure de la planche de support des produits, lors du défilement relatif entre la sonde et la planche. Une première possibilité consiste à disposer la sonde en un emplacement tel que, lors du mouvement de transfert de la planche en sortie de la machine de moulage, la sonde se trouve alternativement en regard de faces supérieures de parois du produit et en regard de la planche, à travers des alvéoles du produit lorsque celles-ci sont débouchantes, entre les parois de celui-ci. Une autre possibilité consiste à monter la sonde sur un support mobile de manière à balayer successivement une face supérieure d'un produit porté par la planche et la face supérieure de la planche, ou réciproquement.

La mesure de la hauteur d'une face supérieure d'un produit porté par la planche suffit généralement pour donner une indication représentative de la dimension non seulement de ce produit, mais aussi d'autres produits moulés simultanément et portés par la même planche. La face supérieure de produit située en regard de la sonde est alors celle dont la hauteur a la probabilité la plus grande d'être affectée par un défaut ou un incident survenant dans la machine de moulage, comme par exemple un défaut de remplissage de moule.

En variante, les hauteurs des faces supérieures de plusieurs parois d'un même produit ou de parois de différents produits portés par la même planche peuvent être mesurées au moyen d'un capteur dont la sonde est déplaçable transversalement par rapport à la direction de défilement relatif entre la ou les sondes et la planche.

L'utilisation d'un asservissement en X et en Y de type connu pour le déplacement de la sonde de mesure de hauteur de la face supérieure des produits selon deux directions perpendiculaires, au moyen par exemple de moteurs pas à pas, permet de programmer la trajectoire de déplacement de la sonde en fonction du type de produits à contrôler, de leur espacement réciproque, de leur géométrie... ou d'autres paramètres.

L'ensemble de mesure et de contrôle selon l'invention peut aussi être monté sur des machines mobiles de coulage de prédalles, sur les pistes de coulage (notamment en précontrainte). La mesure de hauteur des prédalles est alors de préférence effectuée au moyen d'au moins trois capteurs fixes montés à l'arrière de la machine. Deux premiers capteurs au moins ont chacun une sonde située en regard de la face supérieure du produit, ces sondes étant largement espacées l'une de l'autre en raison de la grande largeur du produit. Un deuxième capteur a une sonde située en regard du fond de moule ou de toute autre référence. Le déplacement relatif entre les sondes et le fond de moule est donné par l'avance de la machine sur ses rails de roulement.

Dans tous les cas, le circuit de traitement des informations fournies par le ou chaque capteur comprend des moyens de comparaison entre la dimension mesurée et une ou plusieurs valeurs de seuil de manière à pouvoir déclencher une alarme et commander l'arrêt de la machine de moulage ou de coulage lorsque, par exemple, la dimension mesurée est inférieure à une valeur minimale prédéterminée.

D'autres particularités et avantages de l'ensemble de mesure et de contrôle conforme à l'invention ressortiront à la lecture de la description faite ci-après, à titre indicatif mais non limitatif, en référence aux dessins annexés sur lesquels :

- la figure 1 est une vue générale schématique d'un mode de réalisation d'un ensemble de mesure et de contrôle selon l'invention,

- la figure 2 est un schéma bloc du circuit de traitement relié aux capteurs de distance à ultrasons de l'ensemble de la figure 1, et

- la figure 3 est un organigramme relatif aux opérations effectuées par le circuit de traitement de la figure 2.

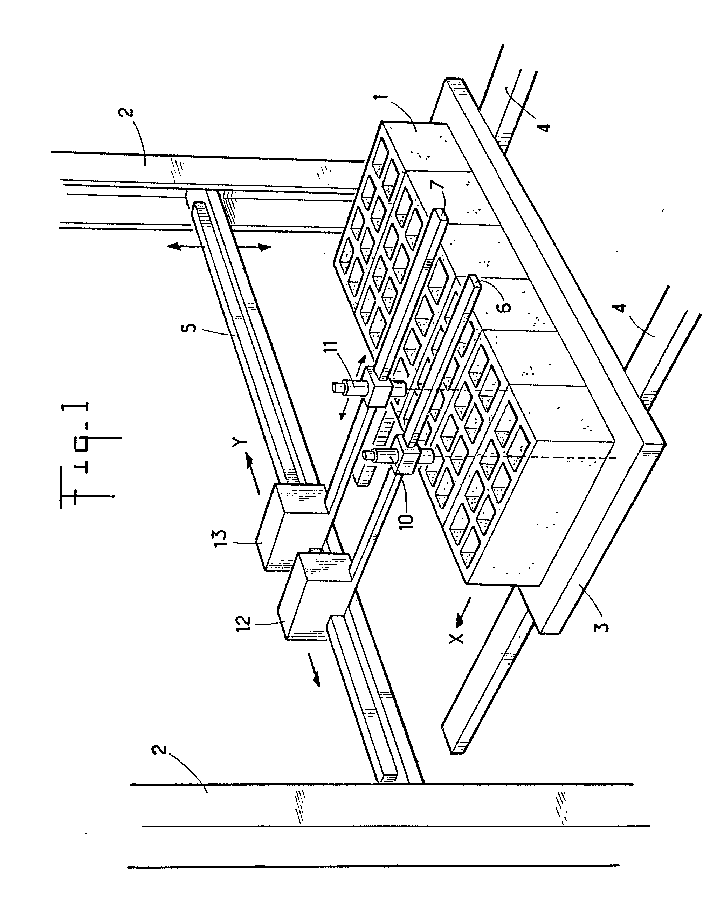

Comme il apparaît sur la figure 1, l'ensemble de mesure et de contrôle est disposé sur le trajet de produits frais en béton 1, tels que des blocs, entre une machine de moulage (non représentée) et un poste suivant de l'installation de fabrication des produits 1, par exemple un ascenseur 2 de préstockage. Les produits démoulés 1 sont supportés par une planche horizontale 3. Le transfert des produits 1 en direction horizontale X entre la machine de moulage et l'ascenseur de préstockage est assuré au moyen d'un convoyeur 4.

Dans l'exemple de réalisation illustré, l'ensemble de mesure et de contrôle comprend deux capteurs de distance à ultrasons montés sur une traverse horizontale 5 fixée par exemple au bâti de l'ascenseur de préstockage et s'étendant en direction Y perpendiculaire à la direction X de défilement des produits 1. Chaque capteur comprend une sonde 10, 11 émettrice-réceptrice d'ultrasons reliée à un boîtier, respectivement 12, 13 au moyen de conducteurs souples. Chaque boîtier 12, 13 comprend les circuits électroniques nécessaires, d'une part, à l'excitation de la sonde associée pour provoquer l'émission d'ultrasons et, d'autre part, au traitement des signaux produits par la sonde en réponse à la réception des ultrasons réfléchis par une surface située en regard de la sonde, de manière à délivrer, par exemple sous forme numérique, un signal représentatif de la distance entre la sonde et la surface située en regard de celle-ci. Des capteurs de distance à ultrasons de ce type sont connus. On pourra par exemple utiliser les capteurs proposés par la société française Honeywell S.A. sous la référence : série "Microsonic" 942 qui permettent de mesurer des distances comprises entre 150 et 1500 mm, avec une résolution de l'ordre du millimètre. Les capteurs sont munis de moyens de compensation de dérives d'origine thermique, ce qui permet de les intégrer sans problème dans une installation où règne généralement la température extérieure, c'est-à-dire une température sujette à fortes variations.

En variante, les capteurs à ultrasons peuvent être remplacés par des capteurs de distance à triangulation optique laser tels que par exemple ceux que propose la société japonaise Matsuchita sous la référence MQLA1S1AC240VH01. Ce type de capteurs permet de mesurer des distances comprises entre 50 et 100 mm avec une précision de l'ordre du demi-millimètre, à une fréquence de 100 Hz et avec une compensation des dérives thermiques.

Chaque capteur est monté sur un bras ou une fourche horizontal 6, 7 porté par la traverse 5 et s'étendent perpendiculairement à celle-ci, en direction de la machine de moulage. La sonde 10 du premier capteur est montée sur le bras 6 dans une position réglable le long de celui-ci, tandis que le boîtier associé 12 est monté sur le même bras, à l'extrémité de celui-ci fixée à la traverse 5. La position du bras 6 le long de la traverse 5 est réglable de sorte que la sonde 10 se trouve à la verticale de la surface supérieure de la planche 3, en dehors de la zone de celle-ci occupée par les produits 1, lors du déplacement de la planche en direction de l'ascenseur de préstockage.

La sonde 11 du deuxième capteur est montée sur le bras 7 dans une position réglable le long de celui-ci, tandis que le boîtier associé 13 est monté sur le même bras, à l'extrémité de celui-ci fixée à la traverse 5. La position du bras 7 le long de la traverse 5 est réglable de sorte que la sonde 11 se trouve à la verticale de la face supérieure d'une paroi d'un produit 1 porté par la planche lors du déplacement de celle-ci vers l'ascenseur de préstockage.

Les capteurs fournissent des informations représentatives de la distance entre la sonde 10 et la face supérieure de la planche 3 et de la distance entre la sonde 11 et la face supérieure du produit porté par la planche en regard de cette sonde, c'est-à-dire des informations représentatives des hauteurs de ces faces supérieures. Par différence , il est donc possible de fournir une information représentative de la dimension du produit entre sa face inférieure reposant sur la planche et sa face supérieure. Il est généralement suffisant de déterminer la dimension verticale d'un des produits portés par la planche pour s'assurer que tous les produits ont une dimension correcte. De préférence, compte tenu des particularités de la machine de moulage, on choisira l'emplacement de la sonde 11 pour mesurer la dimension du produit qui a la plus forte probabilité d'être défectueux en cas d'incident survenant lors du moulage comme, par exemple, un remplissage incorrect du moule.

On notera encore qu'une possibilité de réglage de la position verticale de la traverse 5 est avantageusement prévue afin d'ajuster la position de la hauteur des sondes 10, 11 en fonction par exemple de la dimension verticale des produits à contrôler.

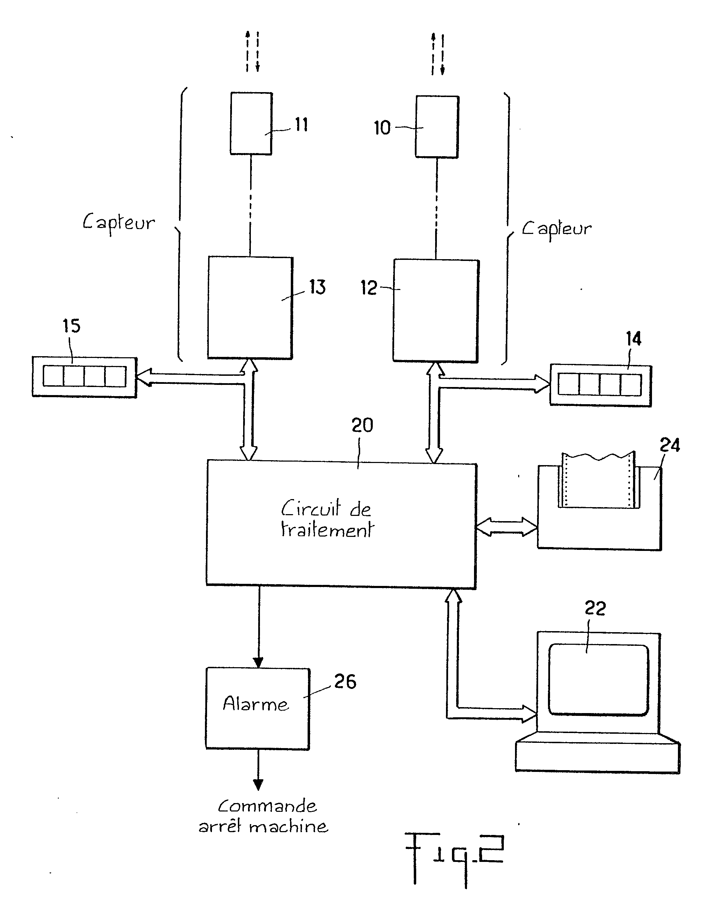

Comme le montre la figure 2, les informations fournies par les capteurs, par exemple sous forme numérique, sont transmises à un circuit de traitement 20. Les mêmes informations peuvent être envoyées également à des dispositifs d'affichage numérique 14, 15 qui indiquent directement les distances mesurées par les capteurs. Ces dispositifs d'affichage sont par exemple ceux proposés par la société précitée Honeywell S.A. pour être utilisés avec les capteurs de la série "Microsonic" 942.

Le circuit de traitement 20 est un circuit à microprocesseur auquel peuvent être reliés des terminaux tels qu'une console 22 munie d'un clavier et une imprimante 24, ainsi qu'un circuit d'alarme 26.

Les informations numériques délivrées par les capteurs sont reçues à une fréquence de mesure de plusieurs dizaines de Hertz. Compte-tenu de la dimension horizontale de la planche et des produits dans le sens de leur défilement par rapport aux sondes, de la vitesse de défilement et de l'état de surface, on dispose ainsi d'une mesure par distance d'exploration de plusieurs millimètres. Il est alors possible d'envisager un traitement statistique des informations numériques reçues pour s'affranchir de valeurs erronées dues notamment à la présence de débris de béton, irrégularités de surface de la planche ou des produits.

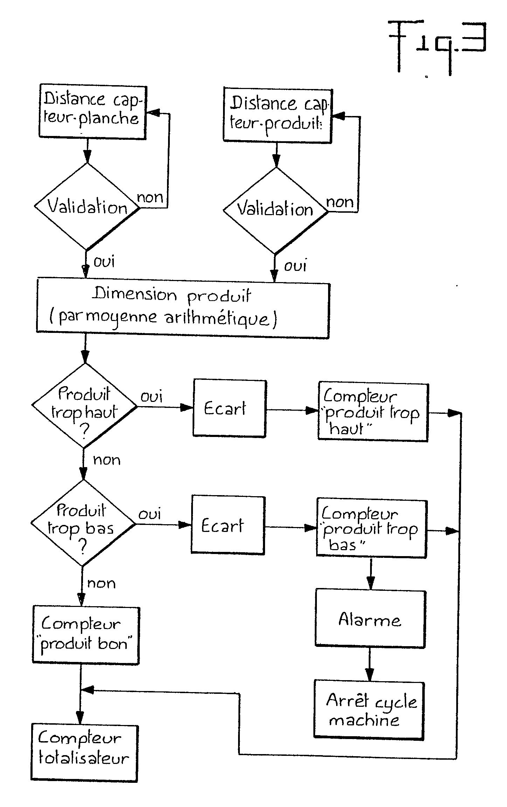

La figure 3 illustre un exemple d'opérations effectuées par le circuit de traitement sous la commande de programmes enregistrés à demeure.

Les informations numériques représentatives de la distance entre la sonde 10 et la planche 3 sont validées après vérification qu'elles se situent dans une plage prédéfinie, ceci afin d'éliminer d'éventuelles valeurs manifestement anormales. Il en est de même pour les informations numériques représentatives de la distance entre la sonde 11 et la face supérieure du produit passant en regard de la sonde.

Le traitement statistique effectué sur les informations numériques validées consiste par exemple en un moyennage. La dimension recherchée est calculée par différence entre les moyennes arithmétiques obtenues pour les distances entre sonde et planche et entre sonde et produit.

Si la dimension calculée est supérieure à un seuil maximum prédéterminé (produit trop haut) l'écart avec ce seuil est calculé et enregistré et le contenu d'un compteur de produits trop haut est incrémenté d'une unité.

De façon similaire, si la dimension calculée est inférieure à un seuil minimum prédéterminé (produit trop bas), l'écart avec ce seuil est calculé et enregistré et le contenu du compteur de produits trop bas est incrémenté d'une unité. En outre, la détection d'un produit trop bas commande l'émission d'une alarme, par exemple une alarme sonore, et l'arrêt du cycle en cours de la machine de moulage, le défaut constaté provenant vraisemblablement d'un remplissage défectueux des moules.

Si la dimension calculée n'est ni supérieure au seuil maximum, ni inférieure au seuil minimum, le contenu d'un compteur de produits bons est incrémenté d'une unité.

Par ailleurs un compteur dit totalisateur est incrémenté à chaque fabrication d'une planche de produits. Une comparaison avec la somme des trois compteurs précédents permet de qualifier le taux de prise en compte.

La dimension calculée, les écarts éventuels par rapport aux seuils minimum et maximum et, le cas échéant, les contenus des compteurs sont affichés sur la console 22 ou sur des afficheurs annexes et, si désiré édités au moyen de l'imprimante 24.

Une excursion de la dimension mesurée des produits à l'extérieur de la plage admissible prédéterminée étant signalée immédiatement après la sortie des produits hors de la machine de moulage, l'opérateur peut intervenir sur celle-ci pour le cycle de moulage suivant. Le délai entre la détection de produits défectueux et l'intervention sur la machine est ainsi réduit au minimum. De plus, l'arrêt automatique de la machine de moulage en réponse à la détection de produits trop bas constitue une sécurité supplémentaire en cas de remplissage défectueux des moules.

Un autre avantage de l'ensemble de mesure et de contrôle qui vient d'être décrit tient à ce que cet ensemble s'intègre à l'installation de fabrication des produits sans demander de modification de l'installation ou même du processus de fabrication, puisque les mesures sont effectuées au cours du transfert des produits sans interruption de celui-ci.

Avantageusement, il serait possible de réaliser des mesures lorsque la planche est à l'arrêt, en disposant les sondes 10, 11 de manière qu'elles puissent être déplacées le long des bras 6, 7.

Selon une autre variante, un seul capteur de distance peut être utilisé en faisant en sorte que, lors du défilement relatif entre la planche portant les produits et la sonde, celle-ci se trouve alternativement ou successivement en regard de la planche et d'une face supérieure d'au moins un produit. Par exemple, la sonde pourra être disposée de manière à faire face alternativement à une face supérieure d'une paroi transversale d'un produit et à une zone de la surface supérieure de la planche, à travers une alvéole débouchante du produit. Il serait également envisageable de prévoir un capteur mobile en direction transversale par rapport à la direction de défilement de la planche avec, éventuellement, la sonde mobile le long de son bras support pour balayer successivement une partie de la surface supérieure de la planche et au moins une face supérieure d'un produit.

Selon encore une autre variante, des mesures pourront être effectuées sur plusieurs produits portés par la même planche. Dans ce cas, au moins l'un des capteurs est monté sur un bras mobile le long de la traverse 5 pour balayer des faces supérieures de plusieurs produits situés côte à côte sur la planche.

Dans les cas envisagés ci-avant de capteur mobile le long de son bras support ou de capteur mobile transversalement le long de la traverse support, les déplacements sont avantageusement asservis au moyen de moteurs pas à pas dont l'électronique est couplée au circuit de traitement. Il est ainsi possible de programmer la trajectoire du capteur mobile explorant la face supérieure du ou des produits en fonction de la configuration géométrique des produits sur la planche. Un tel ensemble d'asservissement est, par exemple, réalisé par la société française SOCITEC.

Selon une variante d'application de l'ensemble de mesure et de contrôle conforme à l'invention, des mesures de hauteur de prédalles précontraintes peuvent être effectuées par montage de cet ensemble sur la machine de coulage des prédalles. La largeur des produits nécessite la mise en oeuvre d'au moins trois capteurs fixes montés sur des cannes- sondes à l'arrière de la machine de coulage, au moins deux capteurs étant utilisés pour mesurer la hauteur de la face supérieure du produit.

## Revendications

1. Ensemble de mesure et de contrôle de dimension de produits frais en béton portés par un support, comportant au moins un capteur permettant de déterminer une dimension des produits par différence entre la hauteur de la face supérieure des produits et la hauteur d'une surface de référence,
caractérisé en ce que :
- le ou chaque capteur est un capteur sans contact comprenant une sonde émettrice et réceptrice d'un rayonnement capable de fournir un signal représentatif de la distance entre la sonde et une surface située en regard de la sonde,
- la ou chaque sonde (10,11) est disposée de manière à fournir au moyen du ou de chaque capteur des premières informations représentatives de la hauteur d'une face supérieure d'un moins un produit (1) porté par le support (3), en différents points de cette face supérieure, et des deuxièmes informations représentatives de la hauteur de la surface de référence (3), en différents points de celle-ci, les premières et deuxièmes informations étant obtenues au cours d'un défilement relatif entre la ou chaque sonde et le support portant un ou plusieurs produits, et
- le ou chaque capteur est relié à un circuit de traitement (20) recevant les premières et deuxièmes informations et comprenant des moyens de calcul de la dimension recherchée à partir des premières et deuxièmes informations.

2. Ensemble selon la revendication 1, caractérisé en ce que le circuit de traitement (20) comprend des moyens de calcul d'une valeur moyenne de la dimension recherchée à partir desdites premières et deuxièmes informations.

3. Ensemble selon l'une quelconque des revendications 1 et 2, caractérisé en ce qu'il comprend au moins un premier capteur avec une sonde (10) disposée de manière à faire face au support sur lequel reposent les produits, en dehors de la partie du support occupée par les produits, et un deuxième capteur avec une sonde (11) disposée de manière à faire face à une face supérieure d'un produit porté par le support, lors du défilement relatif entre celui-ci et les sondes (10, 11).

4. Ensemble selon l'une quelconque des revendications 1 et 2, caractérisé en ce qu'il comprend un seul capteur avec une sonde disposée de manière à faire face alternativement à une face supérieure d'un produit porté par son support et à la face supérieure dudit support à travers une alvéole débouchante du produit.

5. Ensemble selon l'une quelconque des revendications 1 à 4, dans lequel la ou chaque sonde est placée sur le trajet de défilement des produits en sortie de la machine de moulage, caractérisé en ce qu'au moins l'une des sondes est mobile transversalement par rapport à la direction de défilement des produits.

6. Ensemble selon la revendication 5, caractérisé en ce que le déplacement de l'une au moins des sondes est réalisé par asservissement de déplacement selon deux directions perpendiculaires, au moyen de moteurs pas à pas.

7. Ensemble selon l'une quelconque des revendications 1 ou 2 pour la mesure et le contrôle de dimension de produits réalisés au moyen d'une machine mobile de coulage, caractérisé en ce qu'il comporte au moins trois sondes fixes, l'une étant disposée en regard de la surface de référence en dehors de la partie occupée par les produits, et au moins deux autres sondes étant situées en regard de la face supérieure des produits lors de l'avance de la machine de coulage.

8. Ensemble selon l'une quelconque des revendications 1 à 7, caractérisé en ce que le circuit de traitement comprend des moyens de comparaison de la dimension calculée avec au moins un seuil prédéterminé.

Fig.1

Fig.2

**Fig.3**

**Office européen des brevets**

**RAPPORT DE RECHERCHE EUROPEENNE**

Numero de la demande

EP  89 40 1250

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 709 612  (TONINDUSTRIE PRUEFTECHNIK GMBH) <br> * revendications 1-3,6 * <br> --- | 1 | G 01 B  17/00 <br> G 01 B  11/00 <br> G 01 N  33/38 |
| A | DE-A-3 237 090  (DYCKERHOFF & WIDMANN AG) <br> * abrégé * <br> --- | 1 | |
| A | US-A-4 419 384  (J. F. KANE et al.) <br> * abrégé; figure * <br> --- | 1 | |
| A,D | FR-A-2 586 610  (PASSAVANT-WERKE AG & CO.KG) <br> --- | 1 | |
| A | DD-A-  75 409  (W. DOBBERT et al.) <br> * revendication 1 * <br> --- | 1 | |
| | no. 14, 1977, abrégé no. 220; "Automatik in der Beton-Güteüberwachung" <br> ----- | 1 | |

| | | | DOMAINES TECHNIQUES RECHERCHES (Int. Cl.4) |
|---|---|---|---|
| | | | G 01 B  17/00 <br> G 01 B  11/00 <br> G 01 B  15/00 <br> G 01 B  21/02 <br> G 01 N   9/02 <br> G 01 N  33/38 |

Le présent rapport a été établi pour toutes les revendications

| Lieu de la recherche | Date d'achèvement de la recherche | Examinateur |
|---|---|---|
| BERLIN | 04-08-1989 | KOEHN G |

EPO FORM 1503 03.82 (P0402)